# EUROPEAN PATENT SPECIFICATION

(11) **EP 3 742 030 B1**
(45) Date of publication and mention of the grant of the patent: **30.03.2022**
(21) Application number: 19216116.4
(22) Date of filing: 13.12.2019
(51) Int. Cl.: F16K 15/03

(54) **CHECK VALVE STOP WITH POWDER DAMPER AND METHOD OF MAKING**
RÜCKSCHLAGVENTILANSCHLAG MIT PULVERDÄMPFER UND HERSTELLUNGSVERFAHREN
CLAPET DE RETENUE DOTÉ D'UN AMORTISSEUR DE POUDRE ET SON PROCÉDÉ DE FABRICATION

(30) Priority: 23.05.2019 US 201916420615
(43) Date of publication of application: 25.11.2020
(73) Proprietor: Hamilton Sundstrand Corporation, Charlotte, NC 28217-4578 (US)
(72) Inventor: FENG, Feng, South Windsor, CT Connecticut 06076 (US); DOU, Cheryl Chunyu, Farmington, CT Connecticut 06032 (US); STREETER, James, Torrington, CT Connecticut 06790 (US)
(74) Representative: Dehns

(56) References cited:
- EP-A1- 3 193 054
- EP-A1- 3 483 488
- EP-A2- 1 884 694
- EP-A2- 2 249 068
- WO-A1-2016/037031
- WO-A1-2016/133497
- GB-A- 2 510 064
- US-A1- 2008 053 537
- US-A1- 2019 085 983

## Description

### BACKGROUND

This application relates to a check valve stop and a method of making such a stop.

Check valves are known. Typically, a check valve blocks flow of a fluid through a conduit, until the pressure upstream of the valve overcomes a downstream pressure.

One type of check valve utilizes flapper valves having a central pivot axis and a pair of valve plates which seat on the valve seat in the closed position and contact a stop in the open position. Another type of check valve utilizes a flapper valve having one pivot axis to one side and a valve plate which seats on a valve seat.

When the valve plates opens to allow flow, the movement might be rapid. The valve plate may contact the stop in an opening event with a high force. This can lead to the valve plate or stop being damaged and eventually failing. EP2249068A2 relates to petal stops for check valve assemblies and US 2008/053537 A1 relates to a check valve with a position indicator.

### SUMMARY

A check valve is defined in claim 1. An alternative check valve is defined in claim 6.

A method of forming a check valve stop is disclosed and defined in claim 10.

These and other features may be best understood from the following drawings and specification.

### BRIEF DESCRIPTION OF THE DRAWINGS

Figure 1A shows a check valve.
Figure 1B schematically shows movement of a flapper valve such as in a Figure 1A check valve.
Figure 2A is a side view of the check valve.
Figure 2B is a cross-sectional view of the check valve.
Figure 3 shows internal details.
Figure 4 shows a method of making.

### DETAILED DESCRIPTION

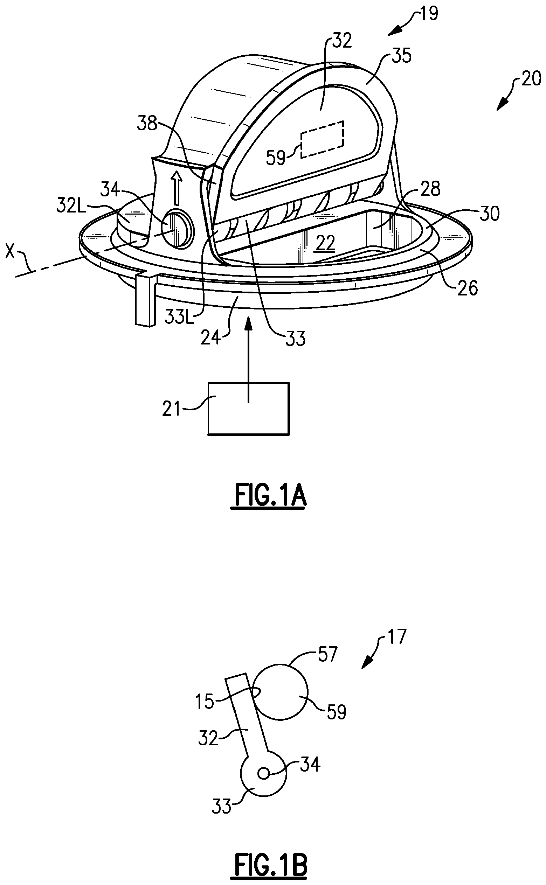

Figure 1A shows a fluid system 20 including a check valve 19 incorporating a flow passage 22 communicated with a source of fluid 21. A conduit 24 includes a valve seat 26 having a seating surface 30. An aperture 28 extends through the valve seat. A flapper 32 selectively closes the aperture 28 to block flow of the fluid through the aperture in a closed position. The valve seat 26, flapper valve 32, and a stop 59 (shown in phantom) could collectively define the check valve 19.

The flapper 32 pivots on a pin 34. Pin 34 allows the flapper 32 to pivot between the closed and open positions. At the open position, the flapper 32 contacts stop 59.

As mentioned above, one type of check valve includes a pair of flapper 32 and 32L. Each have their own fulcrum 33 and 33L pivoting about the pivot pin 34. Figure 1B illustrates a check valve 17 with a single flapper 32. It should be understood that teachings of this disclosure would apply to dual flapper check valves, such as valve 19 or a single flapper valve such as 17.

As shown in Figure 1B, the stop 59 may have a generally cylindrical outer periphery 57, at least at the location where the flapper 32 will contact the stop 59. A contact surface 15 on the flapper 32 contacts the stop 59.

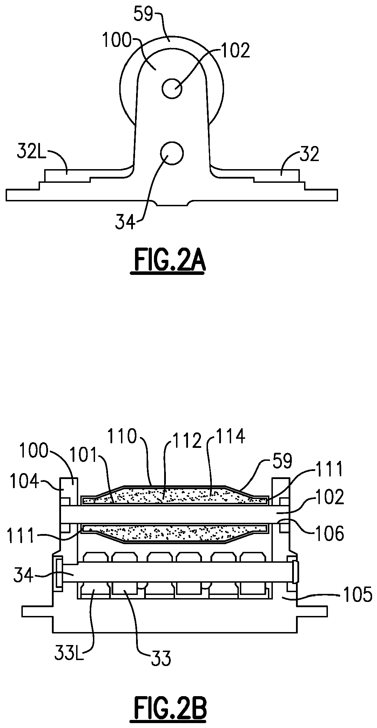

Figure 2A shows a housing 100 mounting a pin 102 that is part of the stop 59. The flapper valves 32 and 32L are also shown.

As shown in Figure 2B, the housing 100 actually includes two brackets 104 and 105 which mount the pivot pin 34 for the fulcrums 33 and 33L. The stop 59 is shown mounted about pin 102, and having an internal solid surface 101 spaced from an outer solid surface 110. A hollow 112 is intermediate the solid surfaces 101 and 110 and end surfaces 111. The hollow is filled with an entrapped particulate material 114. In an embodiment, the solid portions 101, 110 and 111 and the particulate material 114 are all metal.

Returning to Figure 1B, when the flapper 32 strikes the stop 59, in a sense, the solid portion 110 acts as a spring attached to a damper (the particulate material 114). Powder or particle dampers are known, however, they have not been utilized in check valve applications.

The particulate material 114 will dissipate the energy from the contact between the flapper 32 and the stop 59.

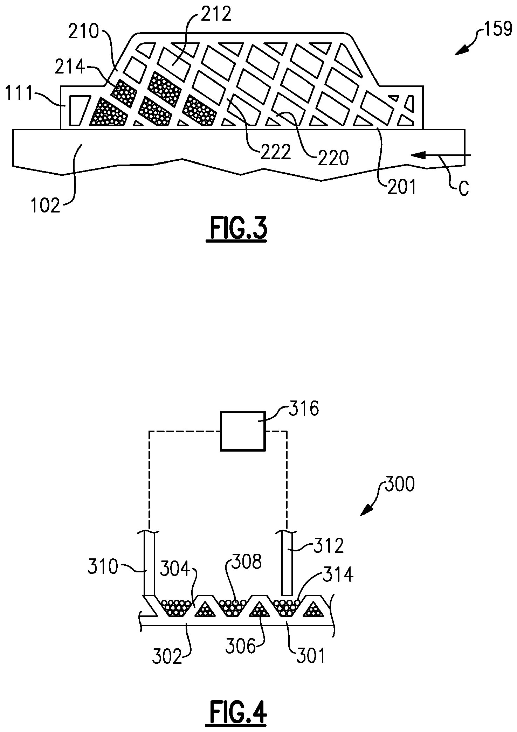

Figure 3 shows another stop embodiment 159. Here, there is the outer solid surface 210, inner surface 201 and a lattice structure including crossing rails 220 and 222. The crossing rails 220 and 222 extend at opposed angles relative to a central axis C of the stop. The central axis C may be on the center of the pin 102 (see Fig. 2B).

There are hollows 212 between the rails 220 and 222. Those hollows are filled with particulate material 214. While only a few hollows 212 are shown filled with particulate material in the Figure 3 embodiment, it should be understood that all hollows could be filled.

In addition, it should be understood that the hollows may be effectively enclosed and trap the powder. Such hollows could be said to be generally fluidly sealed relative to each other due to the rails 220 and 222. On the other hand, the hollows may be open relative to each other.

Figure 4 shows a method of manufacturing 300 for forming a stop such as stops 59 or 159. As shown, an intermediate product 301 includes solid structure 302, rail portions 304, and hollows 306. A machine 310, not being part of the claimed subject matter, which may be an additive manufacturing machine, lays down material in layers to form the stop. It should be understood that additive manufacturing techniques are known, however, they have not been utilized to form structures such as that disclosed here.

In examples, not being part of the claimed subject matter, another machine 312 is shown depositing the particulate material 314 into what will become another hollow once the manufacturing has progressed to enclose the location of the particulate material 314. The machines 310 and 312 may be different machines, or may be the same machine.

In another example, not being part of the claimed subject matter, the additive manufacturing may be selective laser melting. In such a technique, the machines 310 and 312 are the same machine. The material being deposited to form the solid structure 302 is metal particles which are heated as deposited such that they fuse to underlying layers. A control (316), shown schematically, may be controlled to selectively stop the application of heat to the particle when it is time to form the particles 314. Thus, when metal is deposited to form solid structure 302, the metal particles are heated and fused, and when it becomes time to deposit particulate material 314, the metal particles are not heated. To be clear, selective laser melting is an additive process in which layers of powder (particles) are spread successively. Within a layer, a laser locally melts the particles to from the desired solid. Generally, unfused particles are left entrapped to form the particulate material. In this embodiment, the particulate material 314 and the solid structure 302 are formed of a homogeneous material.

In other additive manufacturing examples, not being part of the claimed subject matter, additive manufacturing extrusion (such as FFF - Fused filament fabrication, FDM - Fused deposition modeling, or BMD - Bound metal deposition) may be utilized. In such methods, a filament is melted into a layer through the machine 310. Then, the machine 312 may be a distinct machine which deposits particulate materials.

In another example, not being part of the claimed subject matter, photopolymerization (SLA - Stereolithography apparatus, DLP - Direct light processing, CLIP - Continuous liquid interface production) may be utilized. In these embodiments, a resin is deposited. And a machine cures the resin particles to form a solid portion 312. In these embodiments, the particulate may also be deposited by a distinct machine 312.

In examples, not being part of the claimed subject matter, binder jetting (BJ) or material jetting (MJ) (3DP - 3D printing, polyjet or multijet) may be utilized. In these embodiments, a layer is spread and a binder or additional material is shot into portions of the layer to form the solid portions. Again, some other machine 312 may then be utilized to deposit the particulate material.

Material Jetting dispenses a photopolymer from hundreds of tiny nozzles in a printhead to build a part layer-by-layer. This allows material jetting operations to deposit build material in a rapid, line-wise fashion compared to other point-wise deposition technologies that follow a path to complete the cross-sectional area of a layer. As the droplets are deposited to build a platform they are cured and solidified using UV light. Material jetting processes require support and this is often printed simultaneously during the build from a dissolvable material that is easily removed during post-processing.

Nano particle jetting (NPJ) uses a liquid, which contains metal nanoparticles or support nanoparticles, loaded into the printer as a cartridge and jetted onto the build tray in extremely thin layers of droplets. High temperatures inside the build envelope cause the liquid to evaporate leaving behind metal parts.

Binder Jetting deposits a binding adhesive agent onto thin layers of powder material. The powder materials are either ceramic-based (for example glass or gypsum) or metal (for example stainless steel). The print head moves over the build platform depositing binder droplets, printing each layer in a similar way 2D printers print ink on paper. When a layer is complete, the powder bed moves downwards and a new layer of powder is spread onto the build area. The process repeats until all parts are complete. After printing, the parts are in a green state and require additional post-processing before they are ready to use.

In examples, not being part of the claimed subject matter, which utilize a distinct machine 312, the particulate can be formed of a distinct material from the material utilized to form the solid portion 302.

Of course, other manufacturing techniques not being part of the claimed subject matter, might be utilized.

While a particular lattice shape is disclosed in Figure 3, other shapes such as honeycomb or gyroids may be utilized. In addition, a single set of rails extending along similar angles may be utilized rather than the crossing rails of Figure 3.

The lattice structure is formed of rails within the stop to provide additional rigidity to said stop.

In examples, not being part of the claimed subject matter, a check valve 17/19 including a check valve stop formed according to any of the claims 10 to 12 could include a valve seat 26 defining an aperture 28 and a seating surface 30. A stop 59/159 is fixed in position relative to the valve seat, and has a solid portion formed as a single homogeneous component. At least one cavity is sealed within the solid portion, and at least partially filled with a particulate material. The solid portion defines a contact surface 15. A flapper 32 is moveable between a closed position, in which the flapper is sealingly engaged with the sealing surface, and an open position, in which a contact surface of the flapper is in contact with the stop.

The particulate material is movable within the at least one cavity to dampen an impact forces generated when the flapper contacts the stop during opening of the check valve. The particulate material is sized and configured to provide damping based on physical characteristics of the check valve, and anticipated impact loads during opening of the check valve. An amount of the particulate material within the at least one cavity is selected to dampen impact loads during opening of the check valve.

A worker of ordinary skill in this art would recognize that certain modifications would come within the scope of this disclosure which is defined by the following claims.

## Claims

1. A check valve (17, 19) comprising:
a valve seat (26) defining an aperture and a seating surface;
a stop (59, 159) fixed in position relative to the valve seat and having a solid portion formed as a single homogeneous component, and at least one cavity (121, 212) sealed within the solid portion being at least partially filled with a particulate material (114, 214), the solid portion defining a contact surface; and
a flapper (32) moveable between a closed position, in which the flapper (32) is sealingly engaged with the sealing surface, and an open position, in which a contact surface of the flapper (32) is in contact with the stop (59, 159);
**characterized in that** a lattice structure is formed of rails within said stop to provide additional rigidity to said stop.

2. The check valve (17, 19) as set forth in claim 1, wherein said particulate material (114, 214) is the same material as a material forming said single homogeneous component, or
wherein said particulate material (114, 214) is a different material than a material forming said single homogeneous component.

3. The check valve as set forth in any preceding claim, wherein there are a plurality of said hollows (112, 212).

4. The check valve as set forth in any preceding claim, wherein said particulate material (114, 214) being movable within the at least one cavity (112, 212) to dampen an impact forces generated when the flapper (32) contacts the stop during opening of the check valve, or
wherein the particulate material (114, 214) being sized and configured to provide damping based on physical characteristics of the check valve (17, 19) and anticipated impact loads during opening of the check valve.

5. The check valve (17, 19) as set forth in any preceding claim, wherein an amount of the particulate material (114, 214) within the at least one cavity (112, 212) being selected to dampen impact loads during opening of the check valve.

6. A check valve (17, 19) comprising:
a valve seat (26) defining an aperture; a flapper (32) pivoting about a pivot axis defined by a fulcrum and having a contact surface for contacting a stop in an open position, said stop (59, 159) being formed to include an outer solid surface (110, 210) which will be contacted by said flapper (32), and at least one hollow (121, 212), with a particulate material received within said at least one hollow;
**characterized in that**
said particulate material (114, 214) and said outer solid surface (101, 201) are formed of a metal;
said metal forming said particulate material (114, 214) and said solid surface is the same metal;
said particulate material (114, 214) is configured to dissipate energy from the contact between the flapper (32) and the stop (59).

7. The check valve as set forth in claim 6, wherein said at least one hollow (121, 212) includes a plurality of hollows (121, 212) receiving said particulate material (114, 214).

8. The check valve as set forth in claim 7, wherein said plurality of hollows (212) are formed by at least one set of rails (220, 222), and optionally wherein said at least one set of rails (220, 222), includes at least two sets of rails extending in opposed directions relative to each other to define said plurality of hollows (212), with said opposed directions being opposed relative to a central axis of said stop (159).

9. The check valve as set forth in any of claims 6to 8, wherein said stop (59, 159) has a cylindrical outer surface which contacts said flapper valve (32).

10. A method (300) of forming a check valve stop (59, 159) comprising:
depositing material layer by layer to form a solid portion of the check valve stop (59, 159) as a single homogeneous component having at least one cavity (121, 212) sealed within the solid portion; and
depositing particulate material (114, 214) within said at least one cavity (121, 212) during the layer by layer depositing process;
**characterized in that** a lattice structure is formed of rails within said stop to provide additional rigidity to said stop.

11. The method as set forth in claim 10, wherein said particulate material (114, 214) is formed of a first material and said solid portion being formed of said first material.

12. The method as set forth in claim 11, wherein said particulate material (114, 214) is formed by a distinct material from a material utilized to form said solid portion, and optionally
wherein said particulate material (114, 214) is deposited by a distinct machine from a machine utilized to form said solid layer.

## Patentansprüche

1. Rückschlagventil (17, 19), umfassend:
einen Ventilsitz (26), der eine Öffnung und eine Sitzfläche festlegt;
einen Anschlag (59, 159), der relativ zum Ventilsitz lagefixiert ist und einen festen Abschnitt aufweist, der als eine einzelne homogene Komponente ausgebildet ist, und mindestens einen innerhalb des festen Abschnitts abgedichteten Hohlraum (121, 212), der mindestens teilweise mit einem partikelförmigen Material (114, 214) gefüllt ist, wobei der feste Abschnitt eine Kontaktfläche festlegt; und
eine Klappe (32), die zwischen einer geschlossenen Stellung, in der die Klappe (32) abdichtend mit der Dichtfläche in Eingriff steht, und einer offenen Stellung, in der eine Kontaktfläche der Klappe (32) mit dem Anschlag (59, 159) in Kontakt steht, beweglich ist;
**dadurch gekennzeichnet, dass** eine Gitterstruktur aus Schienen innerhalb des Anschlags gebildet ist, um dem Anschlag zusätzliche Steifigkeit zu verleihen.

2. Rückschlagventil (17, 19) nach Anspruch 1, wobei das partikelförmige Material (114, 214) das gleiche Material wie ein Material ist, das die einzelne homogene Komponente bildet, oder
wobei das partikelförmige Material (114, 214) ein anderes Material ist als ein Material, das die einzelne homogene Komponente bildet.

3. Rückschlagventil nach einem der vorhergehenden Ansprüche, wobei es eine Vielzahl der Hohlräume (112, 212) gibt.

4. Rückschlagventil nach einem der vorhergehenden Ansprüche, wobei das partikelförmige Material (114, 214) innerhalb des mindestens einen Hohlraums (112, 212) bewegbar ist, um Aufprallkräfte zu dämpfen, die erzeugt werden, wenn die Klappe (32) den Anschlag während des Öffnens des Rückschlagventils berührt, oder
wobei das partikelförmige Material (114, 214) so bemessen und konfiguriert ist, dass es basierend auf physikalischen Eigenschaften des Rückschlagventils (17, 19) und erwarteten Stoßbelastungen während des Öffnens des Rückschlagventils eine Dämpfung bereitstellt.

5. Rückschlagventil (17, 19) nach einem der vorhergehenden Ansprüche, wobei eine Menge des partikelförmigen Materials (114, 214) innerhalb des mindestens einen Hohlraums (112, 212) so ausgewählt ist, dass Stoßbelastungen während des Öffnens des Rückschlagventils gedämpft werden.

6. Rückschlagventil (17, 19), umfassend:
einen Ventilsitz (26), der eine Öffnung festlegt;
eine Klappe (32), die um eine Schwenkachse schwenkt, die durch einen Drehpunkt definiert ist, und eine Kontaktfläche zum Kontaktieren eines Anschlags in einer offenen Position aufweist, wobei der Anschlag (59, 159) so ausgebildet ist, dass er eine äußere feste Oberfläche (110, 210), die von der Klappe (32) berührt wird, und mindestens einen Hohlraum (121, 212) umfasst, mit einem partikelförmigen Material, das in dem mindestens einen Hohlraum aufgenommen ist;
**dadurch gekennzeichnet, dass**
das partikelförmige Material (114, 214) und die äußere feste Oberfläche (101, 201) aus einem Metall gebildet sind;
das Metall, das das partikelförmige Material (114, 214) bildet, und die feste Oberfläche dasselbe Metall ist;
das partikelförmige Material (114, 214) so konfiguriert ist, dass es Energie aus dem Kontakt zwischen der Klappe (32) und dem Anschlag (59) abbaut.

7. Rückschlagventil nach Anspruch 6, wobei der mindestens eine Hohlraum (121, 212) eine Vielzahl von Hohlräumen (121, 212) umfasst, die das partikelförmige Material (114, 214) aufnehmen.

8. Rückschlagventil nach Anspruch 7, wobei die Vielzahl von Hohlräumen (212) durch mindestens einen Satz von Schienen (220, 222) ausgebildet sind, und wobei der mindestens eine Satz von Schienen (220, 222) optional mindestens zwei Sätze von Schienen umfasst, die sich in entgegengesetzten Richtungen relativ zueinander erstrecken, um die Vielzahl von Hohlräumen (212) festzulegen, wobei die entgegengesetzten Richtungen relativ zu einer Mittelachse des Anschlags (159) entgegengesetzt sind.

9. Rückschlagventil nach einem der Ansprüche 6 bis 8, wobei der Anschlag (59, 159) eine zylindrische Außenfläche hat, die das Klappenventil (32) berührt.

10. Verfahren (300) zum Bilden eines Rückschlagventilanschlags (59, 159), umfassend:
Ablagerung von Material Schicht für Schicht, um einen festen Abschnitt des Rückschlagventilanschlags (59, 159) als eine einzelne homogene Komponente mit mindestens einem Hohlraum (121, 212) zu bilden, der innerhalb des festen Teils abgedichtet ist; und
Ablagerung von partikelförmigem Material (114, 214) innerhalb des mindestens einen Hohlraums (121, 212) während des Prozesses der Ablagerung Schicht für Schicht;
**dadurch gekennzeichnet, dass** eine Gitterstruktur aus Schienen innerhalb des Anschlags gebildet ist, um dem Anschlag zusätzliche Steifigkeit zu verleihen.

11. Verfahren nach Anspruch 10, wobei das partikelförmige Material (114, 214) aus einem ersten Material gebildet ist und der feste Abschnitt aus dem ersten Material gebildet ist.

12. Verfahren nach Anspruch 11, wobei das partikelförmige Material (114, 214) durch ein Material gebildet ist, das sich von einem Material unterscheidet, das verwendet wird, um den festen Abschnitt zu bilden, und optional
wobei das partikelförmige Material (114, 214) durch eine andere Maschine als eine Maschine abgelagert ist, die verwendet wird, um die feste Schicht zu bilden.

## Revendications

1. Clapet de retenue (17, 19) comprenant :
un siège de clapet (26) définissant une ouverture et une surface de siège ;
une butée (59, 159) fixée en position par rapport au siège de clapet et ayant une partie solide formée comme un composant unique et homogène, et au moins une cavité (121, 212) scellée de manière étanche à l'intérieur de la partie solide étant au moins partiellement remplie d'un matériau particulaire (114, 214), la partie pleine définissant une surface de contact ; et
un battant (32) mobile entre une position fermée, dans laquelle le battant (32) est en prise de manière étanche avec la surface d'étanchéité, et une position ouverte, dans laquelle une surface de contact du battant (32) est en contact avec la butée (59, 159) ;
**caractérisé en ce qu'**une structure en treillis est formée de rails à l'intérieur de ladite butée pour fournir une rigidité supplémentaire à ladite butée.

2. Clapet de retenue (17, 19) selon la revendication 1, dans lequel ledit matériau particulaire (114, 214) est le même matériau qu'un matériau formant ledit composant unique et homogène, ou
dans lequel ledit matériau particulaire (114, 214) est un matériau différent d'un matériau formant ledit composant unique et homogène.

3. Clapet de retenue selon une quelconque revendication précédente, dans lequel il existe une pluralité desdits creux (112, 212).

4. Clapet de retenue selon une quelconque revendication précédente, dans lequel ledit matériau particulaire (114, 214) est mobile à l'intérieur de l'au moins une cavité (112, 212) pour amortir les forces d'impact générées lorsque le battant (32) entre en contact avec la butée lors de l'ouverture du clapet de retenue, ou
dans lequel le matériau particulaire (114, 214) est dimensionné et configuré pour fournir un amortissement sur la base des caractéristiques physiques du clapet de retenue (17, 19) et des charges d'impact anticipées lors de l'ouverture du clapet de retenue.

5. Clapet de retenue (17, 19) selon une quelconque revendication précédente, dans lequel une quantité de matériau particulaire (114, 214) à l'intérieur de l'au moins une cavité (112, 212) est sélectionnée pour amortir les charges d'impact lors de l'ouverture du clapet de retenue.

6. Clapet de retenue (17, 19) comprenant :
un siège de clapet (26) définissant une ouverture ;
un battant (32) pivotant autour d'un axe de pivot défini par un point d'appui et ayant une surface de contact destinée à entrer en contact avec une butée dans une position ouverte, ladite butée (59, 159) étant formée pour inclure une surface solide extérieure (110, 210) qui sera en contact avec ledit battant (32), et au moins un creux (121, 212), avec un matériau particulaire reçu à l'intérieur dudit au moins un creux ;
**caractérisé en ce que**
ledit matériau particulaire (114, 214) et ladite surface solide extérieure (101, 201) sont formés d'un métal ;
ledit métal formant ledit matériau particulaire (114, 214) et ladite surface solide est le même métal ;
ledit matériau particulaire (114, 214) est configuré pour dissiper l'énergie à partir du contact entre le battant (32) et la butée (59).

7. Clapet de retenue selon la revendication 6, dans lequel ledit au moins un creux (121, 212) comporte une pluralité de creux (121, 212) recevant ledit matériau particulaire (114, 214) .

8. Clapet de retenue selon la revendication 7, dans lequel ladite pluralité de creux (212) est formée par au moins un ensemble de rails (220, 222), et facultativement dans lequel ledit au moins un ensemble de rails (220, 222) comporte au moins deux ensembles de rails s'étendant dans des directions opposées l'une par rapport à l'autre pour définir ladite pluralité de creux (212), lesdites directions opposées étant opposées par rapport à un axe central de ladite butée (159).

9. Clapet de retenue selon l'une quelconque des revendications 6 à 8, dans lequel ladite butée (59, 159) a une surface extérieure cylindrique qui entre en contact avec ledit clapet à battant (32).

10. Procédé (300) de formation d'une butée de clapet de retenue (59, 159) comprenant :
le dépôt de matériau couche par couche pour former une partie solide de la butée de clapet de retenue (59, 159) sous la forme d'un composant unique et homogène ayant au moins une cavité (121, 212) scellée de manière étanche à l'intérieur de la partie solide ; et
le dépôt de matériau particulaire (114, 214) à l'intérieur de ladite au moins une cavité (121, 212) lors du processus de dépôt couche par couche ;
**caractérisé en ce qu'**une structure en treillis est formée de rails à l'intérieur de ladite butée pour fournir une rigidité supplémentaire à ladite butée.

11. Procédé selon la revendication 10, dans lequel ledit matériau particulaire (114, 214) est formé d'un premier matériau et ladite partie solide étant formée dudit premier matériau.

12. Procédé selon la revendication 11, dans lequel ledit matériau particulaire (114, 214) est formé par un matériau distinct à partir d'un matériau utilisé pour former ladite partie solide, et éventuellement
dans lequel ledit matériau particulaire (114, 214) est déposé par une machine distincte à partir d'une machine utilisée pour former ladite couche solide.
